Europäisches Patentamt

European Patent Office

Office européen des brevets

(19)

(11) Veröffentlichungsnummer: **0 127 576**
**B1**

# (12) EUROPÄISCHE PATENTSCHRIFT

(45) Veröffentlichungstag der Patentschrift:
07.01.88

(51) Int. Cl.⁴: **F 16 H 25/20**

(21) Anmeldenummer: **84810203.4**

(22) Anmeldetag: **30.04.84**

(54) **Linear-Antriebsvorrichtung mit zwei Motoren.**

(30) Priorität: **29.04.83 CH 2303/83**

(43) Veröffentlichungstag der Anmeldung:
**05.12.84 Patentblatt 84/49**

(45) Bekanntmachung des Hinweises auf die Patenterteilung:
**07.01.88 Patentblatt 88/1**

(84) Benannte Vertragsstaaten:
**AT BE DE FR GB IT LU NL SE**

(56) Entgegenhaltungen:
**WO - A - 83/02141**
**FR - A - 2 187 071**
**GB - A - 1 314 062**
**US - A - 2 630 022**

**L'USINE NOUVELLE, Nr. 2, 13. Januar 1983,"Actionneur
linéaire à vitesse variable et positionnement
ultra-précis",Seite 50,linke Spalte
Patent Abstracts of Japan Band 4, Nr. 132, 17.
September 1980 Seite 141M32 & JP-A-55-90244**

(73) Patentinhaber: **Lars International S.A. Luxembourg, 25,
Rue Notre Dame, L-Luxemburg (LU)**

(72) Erfinder: **Fickler, Hans, Weidstrasse 18,
CH-8542 Wiesendangen (CH)**

(74) Vertreter: **Lusuardi, Werther Giovanni, Dr., Patentanwalt
Stockerstrasse 8, CH-8002 Zürich (CH)**

## Beschreibung

Die Erfindung bezieht sich auf eine Linearantriebsvorrichtung mit zwei Motoren, bei der ein Motor eine Mutter, der andere Motor eine Schraubspindel antreibt.

Bei solchen zweimotorigen Linearantriebsvorrichtungen lässt sich ein schleichender, sehr langsamer Vorschub erreichen, wenn beide Motoren den gleichen Drehsinn haben, aber mit einem geringen Tourenzahl-Unterschied betrieben werden. Ein schneller Vorschub lässt sich erreichen, wenn nur ein Motor betrieben wird und der andere Motor stillsteht und schliesslich lässt sich ein sehr schneller Vorschub erreichen, wenn die beiden Motoren gegenläufig betrieben werden. Derartige Linearantriebsvorrichtungen sind beispielsweise in der WO 83/02141, veröffentlicht am 23. Juni 1983, beschrieben. Für diese Linearantriebsvorrichtungen sind zur Erzielung eines sehr langsamen Vorschubes Schrittmotoren mit elektronischer Steuerung erforderlich, die 1000 oder mehr Schritte pro Umdrehung machen. Solche elektronischen Steuerungen sind aber sehr teuer.

Schliesslich ist eine Linearantriebsvorrichtung gemäss dem Oberbegriff des Patentanspruchs 1 bekannt (JP-A-5 590 244), bei der durch Kugelumlaufbauweise eine sehr hohe und genaue Positionierung ermöglicht werden soll. Die erreichbare Genauigkeit ist allerdings für Präzisionszwecke ungenügend, da nur die Mutter über eine Zahnrad-Untersetzung angetrieben wird und die Schraubspindel wie bei herkömmmlichen Linearantriebsvorrichtungen direkt angetrieben wird.

Hier will die Erfindung Abhilfe schaffen. Die Erfindung, wie sie in den Ansprüchen gekennzeichnet ist, löst die Aufgabe, auf einfache und kostengünstige Weise eine extrem langsame Vorschubgeschwindigkeit und extrem kleine Vorschubschritte zu ermöglichen.

Der geringe, aber genau definierte Unterschied der Übersetzungsverhältnisse der beiden Zwischengetriebe ergibt bei gleichem Drehsinn und gleicher Tourenzahl bereits eine sehr geringe Vorschubgeschwindigkeit, die durch Änderung der Tourenzahlen noch verringert werden kann. Werden Schrittmotoren verwendet, lassen sich Vorschubschritte unter 1/1000 mm erreichen.

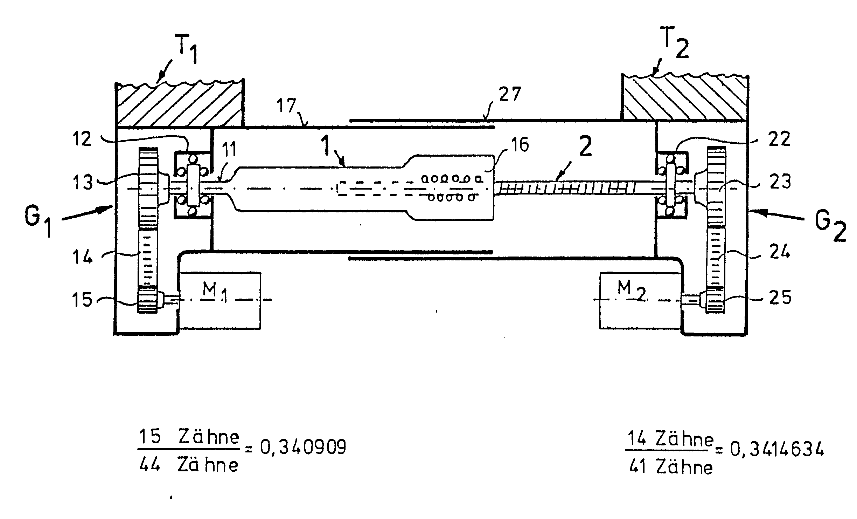

## Die Zeichnung

In der Zeichnung ist ein Linearantriebsvorrichtung im Längsschnitt, schematisch dargestellt.

Der linke Teil der Figur zeigt einen Gehäuseteil G1, in dem eine Hohlwelle 1 axial und radial, spielfrei gelagert und ein Zwischengetriebe 13, 14, 15 untergebracht ist. Das lagerseitige Ende der Hohlwelle geht in einen Lagerzapfen 11 über, der mit einem Bund versehen ist, welcher eine spielfreie Axial-Radiallagerung 12 ermöglicht. Auf das freie Ende des Lagerzapfens 11 ist ein Zahnriemenrad 13 befestigt, das mittels eines Zahnriemens 14 antreibbar ist.

Aussen am Gehäuseteil G1 ist ein Motor M1 angeflanscht, dessen Welle in das Gehäuse ragt und ein Ritzel 15 trägt. Das freie Ende der Hohlwelle ist erweitert, damit darin eine Kugelumlaufmutter 16 Platz findet. Diese Mutter ist in der Zeichnung nur durch die Kugeln schematisch angedeutet.

Die rechte Hälfte der Figur zeigt einen Gehäuseteil G2, in dem eine der Kugelumlaufmutter 16 angepasste Schraubspindel 2 axial und radial spielfrei gelagert ist. Die weiteren Teile, nämlich die Axial-Radial-Lagerung 22, ein Zahnriemenrad 23, ein Zahnriemen 24, ein Zahnriemen-Ritzel 25, entsprechen den oben beschriebenen Teilen 12–15.

Aussen am Gehäuseteil G2 ist ein Motor M2 angeflanscht. Die Gehäuseteile G1, G2, sind fest mit zwei Maschinenteilen T1, T2, die relativ zueinander verschoben werden sollen, verbunden.

Die beiden Gehäuseteile sind mit teleskopisch ineinander verschiebbaren Hülsen 17, 27 versehen, die die Spindel vor äusseren Einflüssen abschirmen.

Statt nur als Abschirmung können die beiden Hülsen auch so ausgebildet werden, dass sie eine Führung für die Gehäuseteile G1, G2, bilden und zugleich eine Sicherung gegen Verdrehung der beiden Teile G1, G2, bilden. Es ist auch möglich, die Gehäuseteile mit aussen oder innen im Gehäuse angebrachten Führungsstangen zu versehen, die die beiden Gehäuseteile exakt führen und gegen Verdrehung sichern.

Die Übersetzungsverhältnisse der beiden Zwischengetriebe 13, 14, 15 und 23, 24, 25 sind geringfügig verschieden.

Für das dargestellte Beispiel gilt:

Rad 13 hat 44 Zähne und Ritzel 15 hat 15 Zähne. Dies ergibt ein Übersetzungsverhältnis

$$U = \frac{15}{44} = 0{,}340909$$

und

Rad 23 hat 41 Zähne und Ritzel 25 hat 14 Zähne. Dies ergibt ein Übersetzungsverhältnis

$$U = \frac{14}{41} = 0{,}3414634.$$

Machen beide Motoren M1, M2 eine ganze Umdrehung im gleichen Drehsinn, macht die Mutter 0,340909 Umdrehung und die Spindel 0,3414634 Umdrehung. Da der Drehsinn gleich ist, entspricht dies einer 0,3414634–0,340909 = 0,0005544 Relativdrehung der Spindel zur Mutter. Bei einer Steigung des Gewindes der Spindel von 2 mm entspricht dies einem Vorschub von 0,0011088 mm.

Wenn beide Motoren eine volle Umdrehung von 360° machen, beträgt der Vorschub etwas mehr als 1/1000 Millimeter. Verwendet man Schrittmotoren, können diese so gesteuert werden, dass die Linearantriebsvorrichtung beispielsweise auf Knopfdruck jeweils einen Maschinenteil, beispielsweise einen Kreuztisch um 1/1000 mm verschiebt. Bei so geringen Vorschubschritten ist es natürlich wesentlich, dass sämtliche Teile spielfrei arbeiten. Das lässt sich erreichen durch Verwendung von leicht vorgespannten Wälzlagern, durch spielfrei arbeitende Kugelumlaufmuttern mit geschliffener Spindel und spielfrei arbeitenden Zahnriemen.

Bei Verwendung der Linearantriebsvorrichtung zur Verstellung eines Kreuztisches, der wie oben geschildert einen Vorschub mit extrem kleinen Schritten erlaubt, bleibt trotzdem die Möglichkeit einer Schnellverstellung erhalten. Wird nur ein Motor angetrieben, während der zweite Motor stillsteht, ergibt dies einen raschen Vorschub. Wird der zweite Motor gegenläufig betrieben, verdoppelt sich sogar die Vorschubgeschwindigkeit. Die Übersetzung der Zwischengetriebe, die ja nur etwa 1 zu 3 beträgt, spielt dabei keine grosse Rolle.

Neben der geschilderten Anwendung der Linearantriebsvorrichtung für den Antrieb eines Kreuztisches, wobei es sich um Vorschub und Stillstand handelt, kann die Linearantriebsvorrichtung auch für einen kontinuierlichen, extrem langsamen Vorschub verwendet werden. Eine solche Anwendung kommt beispielsweise für Sonnen-Energieanlagen in Frage, bei denen Spiegel dem Sonnenstand entsprechend nachgeführt werden müssen.

**Patentansprüche**

1. Linearantriebsvorrichtung mit einer Schraubspindel und einer Mutter in Kugelumlaufbauweise für hohe Positioniergenauigkeit, wobei ein erster Motor (M1) die Mutter (16) mittels eines Wellenteiles (1) über ein erstes Zwischengetriebe (13, 14, 15) und ein zweiter Motor (M2) die Schraubspindel (2) antreibt, wobei das Wellenteil mit Mutter (16) und das erste Zwischengetriebe über eine Axial-Radial-Lagerung (12) in einem ersten Gehäuseteil (G1) untergebracht sind, wobei die Schraubspindel (2) über eine weitere Axial-Radial-Lagerung (22) in einem zweiten Gehäuseteil (G2) untergebracht sind, wobei diese Gehäuseteile relativ zueinander in Axial-Richtung der Schraubspindel verschiebbar geführt sind, wobei der erste und der zweite Motor (M1, M2) jeweils aussen an dem zugehörigen Gehäuseteil angeflanscht ist und wobei die beiden Gehäuseteile gegen Verdrehung um die Längsachse der Schraubspindel (2) gesichert sind, dadurch gekennzeichnet, dass der Wellenteil (1) eine Hohlwelle ist und der Motor (M2) die Schraubspindel (2) über ein zweites Zwischengetriebe (23, 24, 25) antreibt und dass die beiden Zwischengetriebe einen sehr geringen, aber genau definierten Unterschied ihres Übersetzungsverhältnisses aufweisen.

2. Linearantriebsvorrichtung nach Anspruch 1, dadurch gekennzeichnet, dass die Motoren (M1, M2) Schrittmotoren sind.

3. Linearantriebsvorrichtung nach Anspruch 1, dadurch gekennzeichnet, dass die Zwischengetriebe spielfreie Zahnriemengetriebe (13, 14, 15; 23, 24, 25) sind.

4. Linearantriebsvorrichtung nach Anspruch 1, dadurch gekennzeichnet, dass die Zwischengetriebe Zahnradgetriebe sind.

5. Verwendung der Linearantriebsvorrichtung nach einem der Ansprüche 1 bis 4 zum Antrieb eines Kreuztisches.

**Claims**

1. Linear-drive device with a screw spindle and a recirculating ball screw nut for high positioning accuracy, wherein a first motor (M1) drives the nut (16) by means of a shaft part (1) through a first intermediate transmission (13, 14, 15) and a second motor (M2) drives the screw spindle (2), the shaft part with nut (16) and the first intermediate transmission being located in a first housing (G1) via a radial thrust bearing (12), and the screw spindle (2) being located in a second housing part (G2) via a further radial thrust bearing (22), the housing parts being guided movably with respect to each other in axial direction of the screw spindle, the first and second motor (M1, M2) each being flanged to the outside of the respective housing parts, both housing parts being secured against rotation around the longitudinal axis of the screw spindle (2), characterized by that the shaft part (1) is a hollow shaft, and that the motor (M2) drives the screw spindle (2) through a second intermediate transmission (23, 24, 25), both intermediate transmissions having a very small, but accurately defined difference in transmission ratio.

2. Linear-drive device according to claim 1, characterized by that the motors (M1, M2) are step motors.

3. Linear-drive device according to claim 1, characterized by that the intermediate transmissions are gear belt transmissions (13, 14, 15; 23, 24, 25) free from backlash.

4. Linear-drive device according to claim 1, characterized by that the intermediate transmissions are toothed-wheel transmissions.

5. Linear-drive device according to one of the claims 1 to 4 used for driving a compound table.

**Revendications**

1. Dispositif de mouvement linéaire avec une vis et un écrou rotatif sphérique pour haute précision de positionnement, ayant un premier moteur (M1) qui actionne l'écrou (16) moyennant une partie d'arbre (1) à l'aide d'une première transmission intermédiaire (13, 14, 15) et un deuxième moteur (M2) qui actionne la vis (2), la partie d'arbre (1) avec écrou (16) et la première transmission intermédiaire (13, 14, 15) étant logées moyennant un palier de butée (12) dans une première partie de boîtier (G1) et la vis (2) étant logée moyennant un autre palier de butée (22) dans une deuxième partie de boîtier (G2), ces deux parties de boîtier étant logées déplaçables relativement l'une par rapport à l'autre en direction axiale de la vis, le premier et le deuxième moteur (M1, M2) étant bridés à l'extérieur de la partie de boîtier correspondante et les deux parties de boîtier étant assurées contre une rotation autour de l'axe longitudinale de la vis (2), caractérisé en ce que la partie d'arbre (1) est un arbre creux et que le moteur (M2) actionne la vis (2) à l'aide d'une deuxième transmission intermédiaire (23, 24, 25) et que les deux transmissions intermédiaires ont une différence très faible, mais exactement définie, de leur rapport de transmission.

2. Dispositif de mouvement linéaire selon la revendication 1, caractérisé en ce que les moteurs (M1, M2) sont des moteurs pas-à-pas.

3. Dispositif de mouvement linéaire selon la revendication 1, caractérisé en ce que les transmissions intermédiaires sont des engrenages à courroie dentée (13, 14, 15; 23, 24, 25) sans jeu.

4. Dispositif de mouvement linéaire selon la revendication 1, caractérisé en ce que les transmissions intermédiaires sont des transmissions par engrenage.

5. Utilisation du dispositif de mouvement linéaire selon une des revendications 1 à 4 pour l'actionnement d'une table composée.

$$\frac{14\ \text{Zähne}}{41\ \text{Zähne}} = 0{,}3414634$$

$$\frac{15\ \text{Zähne}}{44\ \text{Zähne}} = 0{,}340909$$